# EUROPEAN PATENT SPECIFICATION

(11) **EP 3 863 418 B1**
(45) Date of publication and mention of the grant of the patent: **15.05.2024**
(21) Application number: 19805380.3
(22) Date of filing: 11.10.2019
(51) Int. Cl.: A23G 9/08, A23G 9/22, F28D 1/06

(54) **MACHINE FOR PRODUCING LIQUID OR SEMILIQUID FOOD PRODUCTS AND MANUFACTURING METHOD THEREOF**
MASCHINE ZUR HERSTELLUNG VON FLÜSSIGEN ODER HALBFLÜSSIGEN NAHRUNGSMITTELN UND VERFAHREN ZU IHRER HERSTELLUNG
MACHINE DE PRODUCTION DE PRODUITS ALIMENTAIRES LIQUIDES OU SEMI-LIQUIDES ET PROCÉDÉ DE FABRICATION ASSOCIÉ

(30) Priority: 12.10.2018 IT 201800009409
(43) Date of publication of application: 18.08.2021
(73) Proprietor: Motor Power Company S.r.l., 42024 Castelnovo di Sotto (RE) (IT)
(72) Inventor: GRANDI, Stefano, 42024 Castelnovo di Sotto (RE) (IT)
(74) Representative: Metroconsult Srl
(86) International application number: PCT/IB2019/058678
(87) International publication number: WO 2020/075124

(56) References cited:
- EP-A1- 3 159 632
- EP-A2- 2 445 356
- WO-A1-2018/109765
- CN-U- 204 141 902
- KR-A- 20140 005 577
- US-B1- 6 830 239

## Description

### [TECHNICAL FIELD]

The present invention relates to a machine for producing liquid or semiliquid food products.

The present invention also relates to a method for making said machine.

By way of example, the machine according to the invention can be used for producing quality ice cream.

### [PRIOR ART]

As is known, the production of quality ice cream includes a step of pasteurizing the mixture in use, wherein the latter is brought to a temperature in the range of, for example, 65°C to 85°C, for the purpose of eliminating any heat-sensitive pathogenic organisms.

The mixture is then quickly brought to a considerably lower temperature, around 4°C.

The pasteurized mixture is then left to settle for a preset time, at a substantially constant temperature around 4°C (maturing).

The last essential production step is the so-called batch freezing, wherein the mixture is mixed and kept at a temperature of approx. 4°C - 5°C, so that the product will acquire its typical softness and creaminess.

Machines are currently available which can carry out one or more of the above-mentioned steps.

The Applicant has verified that the machines known in the art are equipped with thermal treatment systems that are complex from a construction/functional viewpoint and sometimes imply excessive manufacturing costs. KR 2014 0005577 A, WO 2018/109765 A1, EP 2 445 356 B1 all disclose examples of known prior art machines.

It is the object of the present invention to provide a machine for producing liquid or semiliquid food products which is equipped with a thermal treatment system having a simple structure and implying low costs, while at the same time still ensuring effective cooling/heating.

This and other objects are substantially achieved through a machine and a method in accordance with the present invention.

### [BRIEF DESCRIPTION OF THE DRAWINGS]

Further features and advantages will become apparent from the following detailed description of some preferred embodiments of the invention, which is defined in the appended claims.

This description will refer to the annexed drawings, which are also provided merely as explanatory and non-limiting examples, wherein:
- Figure 1 shows a schematic perspective view of a machine according to the invention;
- Figure 2 shows a plan view of a portion of the machine of Figure 1;
- Figure 3 shows a sectional view along plane B-B of the machine portion of Figure 2;
- Figure 4 schematically shows an element of the machine of Figure 1;
- Figure 5 shows a block diagram of a thermal treatment system included in the machine of Figure 1;
- Figures 6a-6b show different operating conditions of a part of the machine of Figure 1;
- Figure 7 shows a front view of a part of the machine of Figure 1;
- Figure 8 shows a rear view of the machine part shown in Figure 7;
- Figures 9-11 show steps of making a part of the machine of Figure 1;
- Figure 12 schematically shows a component of the machine of Figure 1.

The figures show different aspects and embodiments of the present invention. Wherever appropriate, similar structures, components, materials and/or elements are designated in the various drawings by the same reference numerals.

### [DETAILED DESCRIPTION OF THE INVENTION]

With reference to the annexed figures, reference numeral 1 designates as a whole a machine for producing liquid or semiliquid food products in accordance with the present invention.

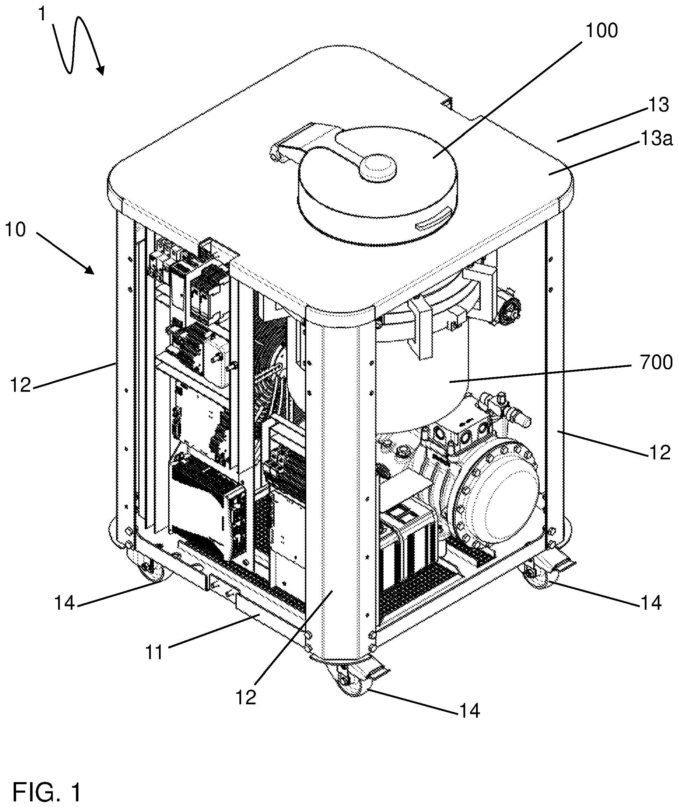

The machine 1 (Figure 1) preferably comprises a frame 10, whereon the various components making up the machine 1 are mounted.

The frame 10 may comprise a base 11, one or more support elements 12 (e.g. in the form of columns or uprights), and a top wall 13 having a top surface 13a that can be used as a worktop.

Preferably, the frame 10 can be associated with one or more motion elements 14, such as swivelling castors, as schematically shown in Figure 1.

The machine 1 also comprises a container 20 associated with said frame 10. The container 20, which may be a "bowl", is suitable for containing a liquid or semiliquid food product and/or a basic mixture and/or a semifinished product for the production of said food product.

By way of example, ingredients for making ice cream, whipped cream, egg cream, fruit sausage, meringues, infusions, oven dough, or for processing (tempering) chocolate, etc., can be inserted into the container 20.

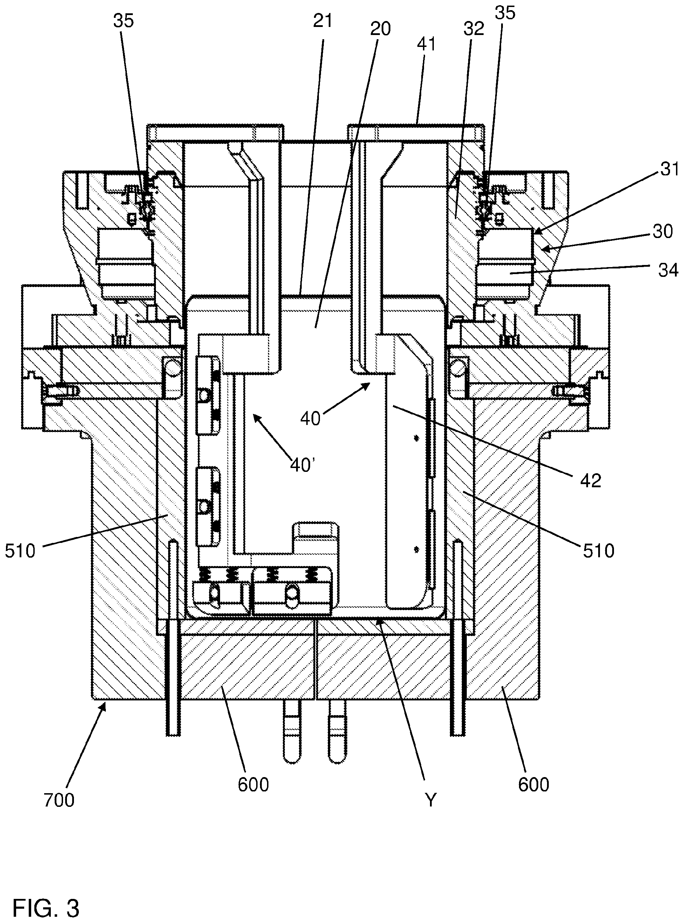

The container 20 (Figure 3) has a substantially vertical extension and a top opening 21. The top opening 21 has multiple functions: it allows loading ingredients and removing the finished product, and also allows tools such as, for example, a batch freezer, a cream whisk, etc., to work the substances in the container 20.

Preferably, the container 20 has a substantially cylindrical shape with a substantially vertical axis of development.

Preferably, the container 20 is removably associated with the frame 10.

This makes it possible to simplify the operations that need to be carried out after the product has been prepared; at the end of the production cycle, the container 20 can be removed from the frame 10 and directly brought into the sale environment, the temperature of which is appropriately controlled by means of a thermostat, without requiring any additional treatment.

In other words, the product is not removed from the container 20, unlike commonly required by prior-art machines, since it is the very container 20 that is extracted from the machine 1. Thanks to the possibility of removing the container 20, the ice cream can be quickly moved from the machine 1 to the area where it will be kept and sold, typically for takeaway. In this manner, in addition to significantly shorter processing times and higher intrinsic quality of the product (since it is not subject to any thermal shocks between production and sale to the consumer), a significant simplification of the production structure is obtained because a machine for treating the product at -40°C is no longer necessary.

Preferably, the container 20 is positioned in a housing Y defined by elements of the thermal treatment system 50, which will be described below.

Preferably, the housing Y is substantially cylindrical.

The container 20 may be made, for example, of stainless steel.

The machine 1 further comprises an actuator 30 associated with the container 20 for moving tools for the production of the food product.

Preferably, the actuator 30 comprises a torque motor 31 (Figure 3).

The Applicant wishes to remind that a torque motor is a particular type of brushless motor, which can output a high torque even at slow speeds, in a substantially continuous manner. Therefore, it allows applying the desired torque in a way not strictly related to the revolution speed. A torque motor is typically characterized by a large number of poles: while traditional brushless motors typically have 2-10 poles, a torque motor may have, for example, 24-56 poles. It is an electronically switched synchronous motor, with the phases offset by 120 electric degrees.

The torque motor 31 comprises:
i. a rotor 32 having a substantially annular or cylindrical shape and a substantially vertical axis of rotation X;
ii. a stator 34 mounted on the frame 10 and defining a substantially circular housing, in which the rotor 32 is rotatably housed.

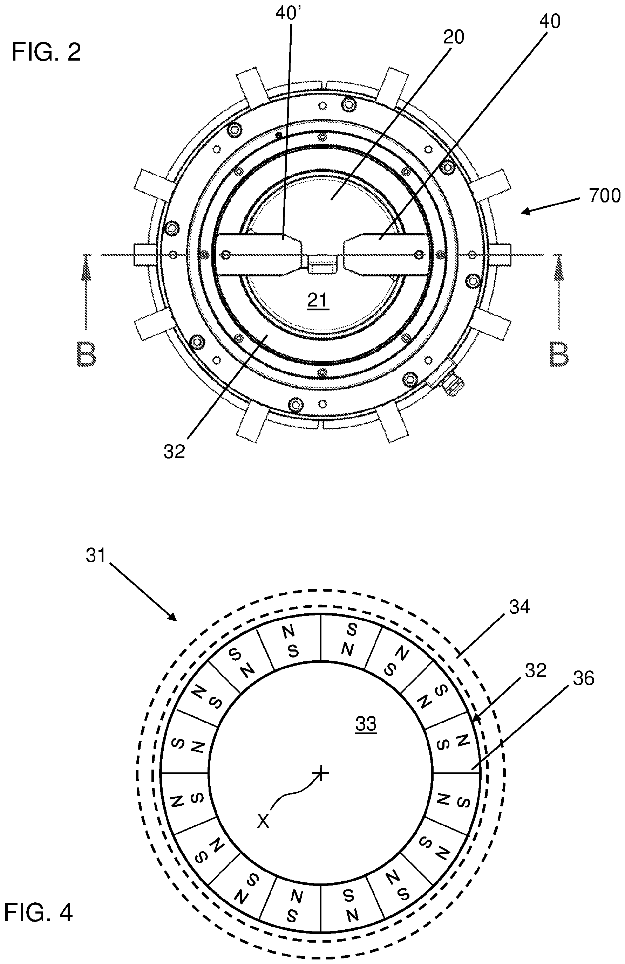

Preferably, the rotor 32 comprises an active portion 36 (Figure 4) having a substantially annular or toroidal shape, which is formed by a plurality of permanent magnets appropriately oriented and arranged in a *per se* known manner.

The permanent magnets are distributed in accordance with said annular or toroidal shape.

In one embodiment, the permanent magnets are arranged along the whole circumferential extension of the active portion 36. As an alternative, the magnets may be arranged along just an arc of the same.

The stator 34 comprises a plurality of windings, which, in a plan view, are circumferentially arranged in such a way as to delimit the above-mentioned circular housing.

Note that the windings may be distributed over the entire circumference of the stator 34 or over just an arc of the same.

It is however envisaged that, for the motor 31 to operate appropriately, the permanent magnets of the active portion 36 are distributed along the entire circumferential extension thereof and/or the windings of the stator 34 are distributed over the entire circumference thereof.

The windings of the stator 34 are suitably powered and controlled to generate a magnetic field that, by interacting with the permanent magnets belonging to the rotor 32, will cause the latter to rotate about its own axis of rotation X.

Figure 4 schematically shows the permanent magnets "NS"/"SN" that make up the active portion 36 and the stator 34 (the windings of the latter are not shown for the sake of simplicity).

It is advantageously envisaged that a detection element (e.g. a Hall sensor) is associated with the rotor 32 in order to detect the position of the latter and allow the stator windings to be driven correctly. In this manner, the revolution speed of the rotor 32 can be adjusted appropriately.

More in detail, the detection element is located in a suitable seat in the stator body. By reading the magnetic flux of the active portion 36 of the rotor 32, it is possible to determine the angular position and the speed of the rotor 32 itself.

One can thus avoid using encoders/resolvers or other similar detection devices; it is however envisaged that the same may be employed wherever appropriate or necessary.

In one embodiment, a so-called "sensorless" technique is used for controlling the actuator 30, i.e. a control technique that requires no transducers and provides a reference representative of the mutual position and/or speed of the rotor 32 and stator 34: this control is based on the electromotive force of the motor 31 itself.

Preferably, the machine 1 is equipped with a bearing structure 35 (Figure 3) associated with the rotor 32 to allow the latter to rotate relative to the other parts of the machine 1, particularly to the stator 34.

In particular, the bearing structure 35 can be mounted higher than the stator 34, in a radially external position relative to the rotor 32.

Preferably, the rotor 32 has a radially internal zone 33 (Figure 4) that, in a plan view, is at least partially superimposed on the top opening 21.

In particular, the rotor 32 is arranged in a radially external position relative to the container 20, so that, in a plan view, the top opening 21 is wholly contained in the radially internal zone 33 of the rotor 32.

Preferably, the rotor 32 and the stator 34 define a substantially cylindrical structure which is substantially coaxial to the container 20.

Advantageously, through the radially internal zone 33 of the rotor 32 it is possible to gain access, via the top opening 21, to the inside of the container 20.

Among other advantages, this implies that some ingredients can be very easily introduced into the mixture while the latter is being processed (e.g. pieces of fruit, candied fruit, etc.).

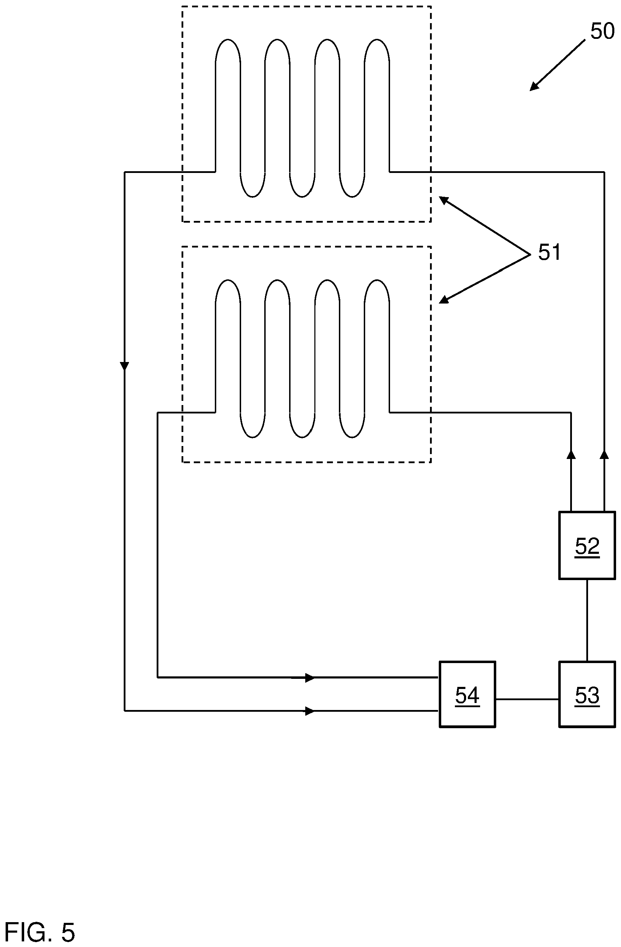

In accordance with the invention, the machine 1 comprises a thermal treatment system 50 (Figure 5) for heating and/or cooling the container 20 and the contents thereof.

Said thermal treatment system 50 comprises, in a *per se* known manner, a compressor 54, an exchanger 53, and preferably one or more thermal expansion elements 52.

In accordance with the invention, the thermal treatment system 50 comprises a thermal exchange structure 51, associated with the container 20.

The function of the thermal exchange structure 51 is to supply heat to and/or remove heat from said container 20. The product, ingredient or semifinished product in the container 20 can thus be heated/cooled.

The thermal exchange structure 51 comprises an annular wall 510 surrounding the container 20 and having a plurality of through holes 511, which extend along the annular wall 510 in the axial direction.

The annular wall 510 is mounted on the frame 10.

The free radially internal space of the annular wall 510 defines the housing Y for the container 20.

Advantageously, the annular wall 510 is an extruded piece, preferably made of aluminium, cut to size as a function of the dimensions of the machine 1 and of the container 20.

The thermal exchange structure 51 comprises a plurality of substantially straight tubular ducts 520 housed in said through holes 511.

Preferably, each tubular duct 520 is housed in a respective through hole 511.

Each one of the tubular ducts 520 runs axially through the annular wall 510. Each tubular duct 520 has a first axial end and a second axial end. The first axial end and the second axial end of each tubular duct 520 protrude from the respective through hole 511.

Preferably, the tubular ducts 520 are made of copper.

The thermal exchange structure 51 comprises a plurality of joints 530, preferably having a curved shape, e.g. a U-shape.

Preferably, the joints 530 are made of copper. The joints 530 joint the tubular ducts 520 so as to form a path for a thermal fluid.

By means of said thermal fluid, it is possible to achieve thermal exchange with the container 20 and the contents thereof.

The Applicant observes that a thermal fluid is a fluid capable of modifying its own physical properties to allow the system to exchange heat with the container 20. The thermal exchange may include the supply of heat to the container 20 (i.e. the container 20 is heated) or the removal of heat from the container 20 (i.e. the container 20 is cooled). The thermal treatment undergone by the container 20 is then directly transferred to the product, mixture or semifinished product contained in the container 20.

By way of example, reference can be made to the diagram of Figure 5: the compressor 54 circulates the thermal fluid through the exchanger 53 and, preferably, through the thermal expansion elements 52; the fluid, appropriately cooled or heated, can then be supplied to the tubular ducts 520, through which heat is supplied to or removed from the container 20. The fluid is then fed back to the compressor 54 to start a new thermal treatment cycle.

Referring back to the joints 530, they are preferably positioned, in succession, on axially opposite sides of the annular wall 510.

Preferably, each end of the U-shape of each joint 530 is coupled to a respective axial end of a tubular duct 520. A sort of coil is thus defined, wherein each tubular duct 520 is connected to a preceding or subsequent tubular duct through a respective joint 530.

According to the invention, the annular wall 510 comprises a first portion 510a and a second portion 510b and each one of said first and second portions 510a, 510b has a substantially C-shaped cross-section.

Preferably, the term "cross-section" refers to a section in a plane orthogonal to the direction of axial development of the annular wall 510.

The mutually facing first portion 510a and second portion 510b define the annular wall 510.

In practical terms, the first portion 510a and the second portion 510b are obtained by cutting the annular wall 510 axially along a diametrical plane.

The first portion 510a and the second portion 510b are removably coupled to each other. The annular wall 510 can therefore be moved between a closed condition and an open condition.

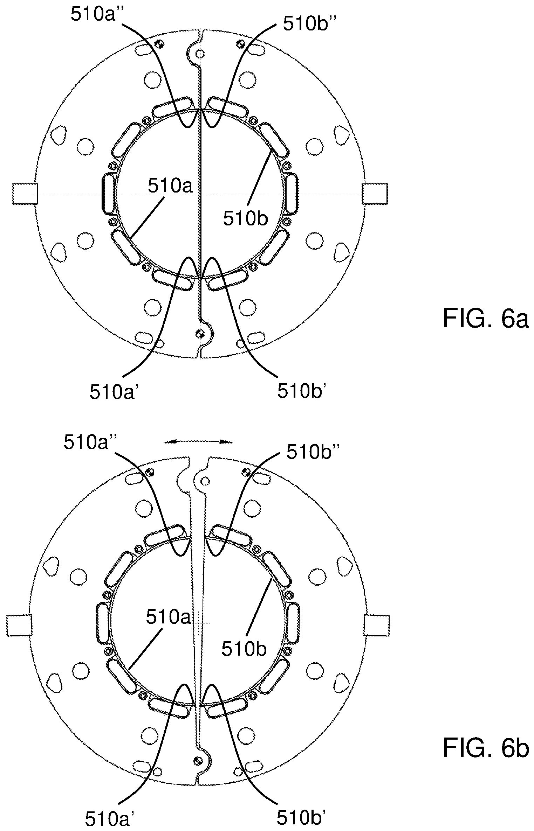

When the radial ends 510a', 510a"of the first portion 510a adhere to the radial ends 510b', 510b" of the second portion 510b, the annular wall 510 is in the closed condition (Figure 6a).

When the annular wall 510 is in the closed condition, its radially internal surface adheres to the radially external surface of the container 20. This ensures optimal heat exchange between the thermal exchange structure 51 and the container 20.

When the annular wall 510 is in the closed condition, the container 20 is constrained to the annular wall 510, so that it cannot be removed.

When at least one of the radial ends 510a', 510a" of the first portion 510a is spaced apart from the respective radial end 510b', 510b" of the second portion 510b, the annular wall 510 is in the open condition (Figure 6b).

When the annular wall 510 is in the open condition, its radially internal surface does not adhere (or does not fully adhere) to the radially external surface of the container 20. Therefore, the container 20 is not constrained to the annular wall 510 and can be extracted.

In the operating condition, the container 20 is housed in the housing Y, constrained in said housing Y by the radially internal surface of the annular wall 510 in the closed condition. The annular wall 510 can be switched from the closed condition to the open condition. When it is in the open condition, the annular wall 510 does not keep the container 20 constrained by means of its radially internal surface. The container 20 can thus be removed.

Subsequently, the container 20 can be positioned into the housing Y again. This operation is advantageously carried out with the annular wall 510 in the open condition. The annular wall is then switched into the closed condition, so as to constrain the container 20. It is then possible to proceed with the preparation/working of a liquid or semiliquid food product contained in the container 20.

Therefore, the annular wall 510 can be reversibly switched between the open condition and the closed condition while remaining mounted on the frame 10. In other words, the open condition of the annular wall 510 is not related to a step of disassembling the machine 1, but to a functional condition of the machine 1 in which the container 20 is released so that it can be extracted, and then preferably reinserted for further processing.

The first portion 510a and the second portion 510b are mutually coupled by means of a coupling system 60.

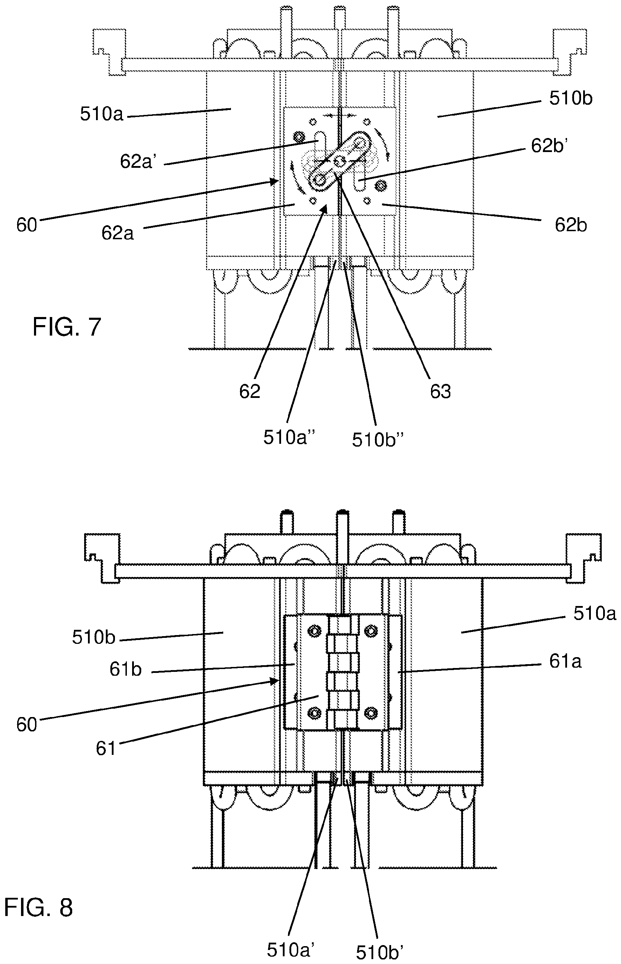

Preferably, the coupling system 60 comprises at least one hinging element 61 (Figure 8). The hinging element 61 is adapted to constrain a first radial end 510a' of the first portion 510a to the respective first radial end 510b' of the second portion 510b.

In one embodiment, the hinging element 61 is constrained to the first and second portions 510a, 510b through respective coupling plates 61a, 61b, e.g. provided with holes for securing the hinging element 61.

Preferably, the coupling system 60 comprises a selective locking device 62 active upon the second radial end 510a" of the first portion 510a and the second radial end 510b" of the second portion 510b.

The locking device 62 can be switched between a first condition and a second condition.

When it is in the first condition, the locking device 62 keeps the second radial end 510a" of the first portion 510a in abutment with the second radial end 510b" of the second portion 510b.

When it is in the second condition, the locking device 62 allows the second radial end 510a" of the first portion 510a and the second radial end 510b" of the second portion 510b to move away from each other.

In the embodiment shown in Figure 7, the locking device 62 comprises a first locking plate 62a, provided with an elongated hole 62a' and mounted on the first portion 510a of the annular wall 510.

The locking device 62 comprises a second locking plate 62b, provided with an elongated hole 62b' and mounted on the second portion 510b of the annular wall 510.

The locking device 62 comprises also a lever 63, centrally pivoted to a supporting structure (not shown) and coupled, at its axial ends, to the elongated holes 62a' and 63a'. Being rotatably movable, the lever 63 either keeps the first and second portions 510a, 510b tightened to each other through the respective locking plates 62a, 62b (oblique position drawn with a thicker line in Figure 7) or allows the first and second portions 510a, 510b to move away from each other (horizontal position, drawn with a thinner line in Figure 7).

In one embodiment, the lever 63 can be moved manually by an operator.

In one embodiment, the lever 63 is driven by a respective actuator (not shown).

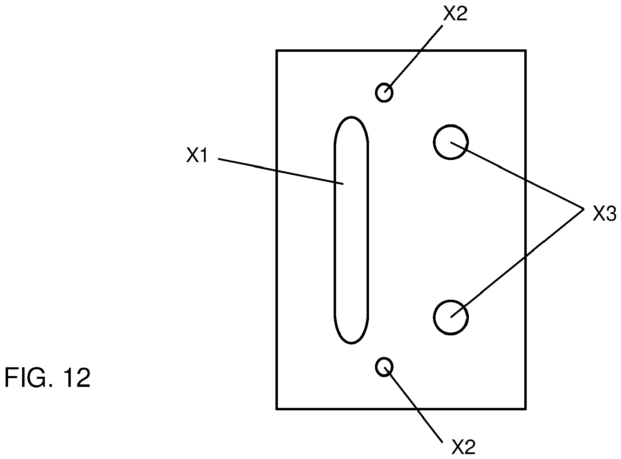

In one embodiment, the coupling plates 61a, 61b and the locking plates 62a, 62b are all equal. In practice, each one of the coupling plates 61a, 61b and locking plates 62a, 62b is made as schematically shown in Figure 12: they include an elongated hole X1, a first pair of holes X1, a second pair of holes X2.

As far as the locking plates 62a, 62b are concerned, the elongated hole X1 corresponds to the elongated holes 62a', 62b'. The elongated hole X1 of the coupling plates 61a, 61b is not used.

As far as the locking plates 62a, 62b are concerned, the first pair of holes X2 are not used, whereas the second pair of holes X2 of the coupling plates 61a, 61b are used for fastening the hinging element 61.

For both the coupling plates 61a, 61b and the locking plates 62a, 62b, the second pair of holes X3 are used for mounting such plates onto the annular wall 510.

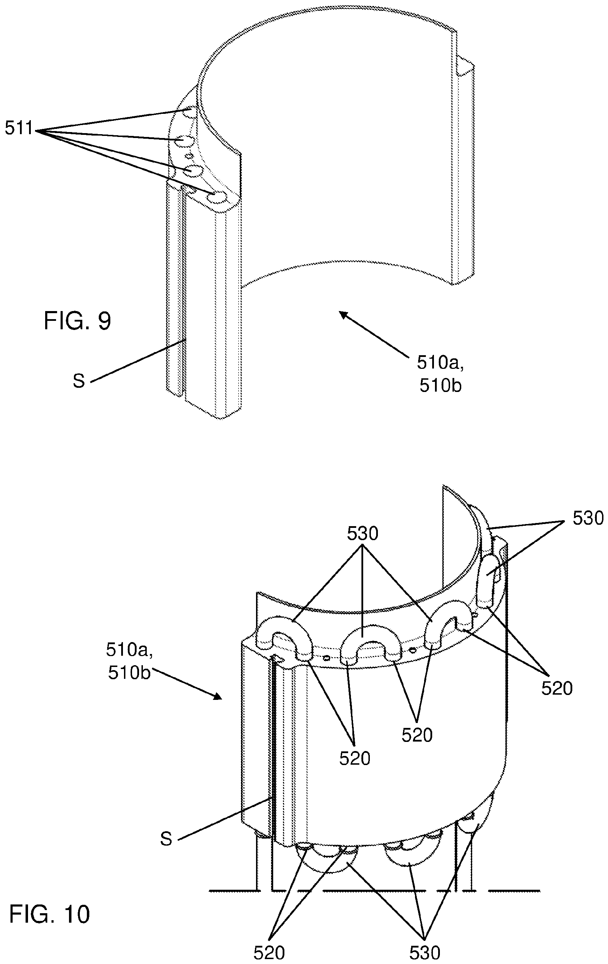

Preferably, each one of the first and second portions 510a, 510b has a pair of splines S (Figures 9-11).

Each spline S may have a dovetail cross-section, a T-shaped cross-section or another similar shape.

The spline S is adapted to receive an abutment element E, preferably having a pair of holes.

By means of a pair of screws or equivalent elements, engaging the through holes X3 and the holes provided on the abutment element E, the plates 61a, 61b, 62a, 62b can be constrained to the portions 510a, 510b.

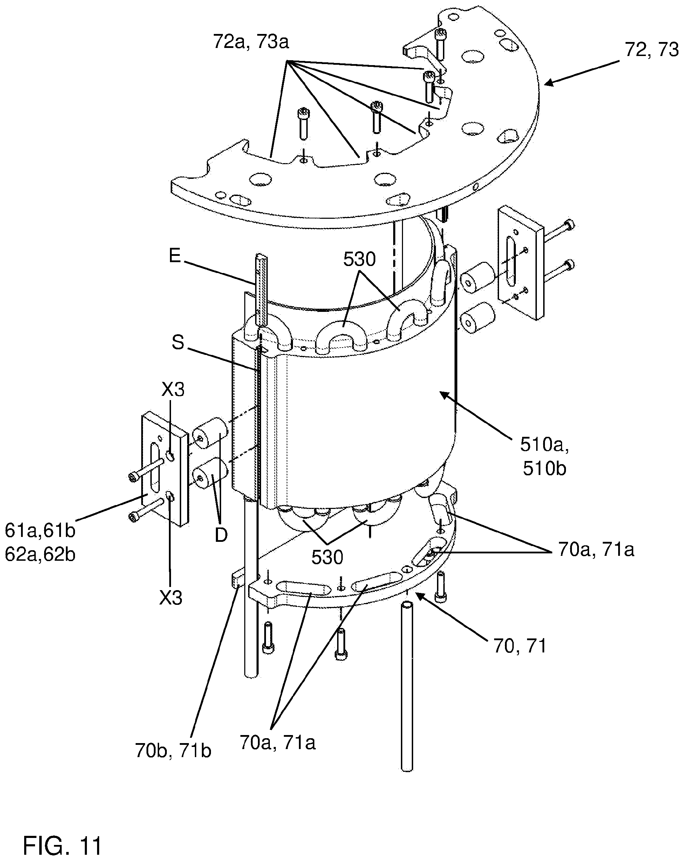

It is preferably envisaged to use a pair of spacers D, schematically shown in Figure 11.

Preferably, the machine 1 comprises first and second closing flanges 70, 71 (Figure 11), respectively coupled to the bottom edges of the first and second portions 510a, 510b of the annular wall 510 to close the bottom of the housing Y.

Each closing flange 70, 71 has a plurality of through cavities 70a, 71a, through which the joints 530 extend, mounted at the bottom edge of the first and second portions 510a, 510b, and a pair of apertures 70b, 71b, through which the extensions of two tubular ducts 520 run for connecting to the remaining components of the thermal treatment system 50.

Preferably, the machine 1 comprises first and second top flanges 72, 73 (Figure 11), respectively fastened to the upper edges of the first and second portions 510a, 510b of the annular wall 510 to allow it to be coupled to the remaining parts of the machine 1 (e.g. the frame 10).

The top flanges 72, 73 have a plurality of apertures 72a, 73a, through which the joints 530, arranged at the upper edge of the first and second portions 510a, 510b, extend.

Note that the annular wall 510, jointly with the flanges 70, 71, 72, 73, the actuator 30 and any other structural elements associated therewith (such as, for example, a containment structure 600, preferably arranged outside the annular wall 510 and also made up of two reversibly separable parts), form an assembly 700, schematically shown in Figure 1-3.

Advantageously, in order to work the food product and/or the basic mixture and/or a semifinished product, the machine 1 comprises at least one tool 40 (Figure 2).

The tool 40 is mounted on the rotor 32 and extends inside the container 20.

Preferably, the tool 40 comprises:
a) an engaging portion 41 for mounting it on the rotor 32;
b) an operating portion 42, associated with the engaging portion 41, for working the food product and/or the basic mixture and/or the semifinished product.

Preferably, the operating portion 42 has a substantially vertical extension and, when in use, extends in the container 20 at a distance from the inner surface of the latter which is shorter than the radius of the container 20. In other words, when the tool 40 is mounted on the rotor 32 and is turned by the latter, there will still be a substantially cylindrical radially internal zone of the container 20 that will not be reached by the tool 40.

Conveniently, the tool 40 is removably mounted on the rotor 32.

In this manner, different tools may be used depending on the operation that needs to be carried out.

For example, the tool may be a mixer, a batch freezer, a cream whisk, etc.

In one embodiment it is envisaged to use also an additional tool 40', similar to the tool 40 and schematically illustrated in Figure 3.

The machine 1 preferably comprises a covering element 100 (Figure 1), such as, for example, a cover associated with the top wall 13 of the frame 10.

The covering element 100 may be simply laid on the top wall 13 or may be hinged thereto.

The function of the covering element 100 is to keep the container 20 and the contents thereof isolated from the outside, for both hygienic and thermal reasons.

When the tool 40 needs to be replaced, or when the container 20 needs to be removed, it will suffice to remove/open the covering element 100 and then carry out the desired operation.

The following will describe a method for making the above-described machine.

It is envisaged to provide an annular wall 510 and to make, in said annular wall 510, through holes 511 in the axial direction.

Preferably, the annular wall is manufactured by extruding a continuous annular semifinished piece, preferably made of aluminium, which is then cut to size to obtain the annular wall 510.

The annular wall 510 is then cut axially, along a diametrical plane, thereby obtaining a first portion 510a and a second portion 510b.

Figure 9 shows a portion that may be either the portion 510a or the portion 510b.

Each one of the first and second portions 510a, 510b has a substantially C-shaped cross-section.

Preferably, the first and second portions 510a, 510b are substantially equal.

Substantially straight tubular ducts 520 are then inserted into the through holes 511.

Preferably, the tubular ducts 520 are inserted into the respective through holes 511 in such a way that the two axial ends of each one of the tubular ducts 520 protrude from the annular wall 510.

Preferably, the tubular ducts 520 are made of copper.

Preferably, after the tubular ducts 520 have been inserted into the through holes 511, they are mechanically expanded to adhere to the profile that delimits the through holes 511.

The tubular ducts 520 are jointed by means of joints 530, so as to form a path for a thermal fluid.

Preferably, the joints 530 are fixed to the tubular ducts 520, and in particular to the axial ends thereof that protrude from the annular wall 510, by welding.

Figure 10 shows a portion, which may be either the first portion 510a or the second portion 510b, coupled to the tubular ducts 520 and to the joints 530.

The closing flanges 70, 71 and the top flanges 72,73 are then mounted to the first and second portions 510a, 510b (Figure 11).

The annular wall 510, the tubular ducts 520 and the joints 530 form a thermal exchange structure 51.

The thermal exchange structure 51 is connected to the remaining elements of a thermal treatment system 50, such as a compressor 54, an exchanger 53 and one or more thermal expansion elements 52, as schematically shown in Figure 5.

The container 20 is inserted into the cylindrical housing Y defined by the free radially internal space of the thermal exchange structure 51.

The actuator 30, which, as aforesaid, is advantageously a torque motor 31, is mounted on the frame 10 and coupled to the thermal exchange structure 51.

On the rotor 32 of the actuator 30 the tool 40 is then mounted, which extends inside the container 20 to work the product, the mixture and/or the ingredients contained therein.

## Claims

1. Machine for producing liquid or semiliquid food products, comprising:
➢ a container (20) adapted to contain a liquid or semiliquid food product and/or a basic mixture and/or a semifinished product for producing said food product, said container (20) having a substantially vertical extension and a top opening (21);
➢ at least one tool (40) extending inside said container (20) to work said food product and/or said basic mixture and/or said semifinished product;
➢ an actuator (30) coupled to said tool (40) to move said tool (40) for the production of said food product;
➢ a thermal treatment system (50) comprising a thermal exchange structure (51) associated with said container (20) and comprising:
i. an annular wall (510) surrounding said container (20) and having through holes (511) extending in the axial direction of the annular wall (510);
ii. substantially straight tubular ducts (520) housed in said through holes (511);
iii. joints (530) for jointing said tubular ducts (520) so as to form a path for a thermal fluid;
wherein said annular wall (510) comprises a first portion (510a) and a second portion (510b), each one of said first and second portions (510a, 510b) having a substantially C-shaped cross-section, wherein said mutually facing first portion (510a) and second portion (510b) define said annular wall (510);
wherein said machine comprises a coupling system (60) for removably coupling the first portion (510a) and the second portion (510b) of said annular wall (510) in such a way that said annular wall (510) can be moved between a closed condition, in which radial ends (510a', 510a") of the first portion (510a) adhere to respective radial ends (510b', 510b") of the second portion (510b), and an open condition, in which at least one of the radial ends (510a', 510a") of the first portion (510a) is spaced apart from the respective end (510b', 510b") of the second portion (510b).

2. Machine according to claim 1, wherein said thermal treatment system (50) further comprises:
➢ a compressor (54);
➢ an exchanger (53);
➢ one or more thermal expansion elements (52);
wherein said thermal fluid circulates in said thermal treatment system (50).

3. Machine according to claim 1 or 2, wherein said coupling system (60) comprises at least one hinging element (61) adapted to constrain a first radial end (510a') of the first portion (510a) to a respective first radial end (510b') of the second portion (510b).

4. Machine according to claim 1 or 2, wherein said coupling system (60) comprises a selective locking device (62) active upon the second radial end (510a") of the first portion (510a) and the second radial end (510b") of the second portion (510b), wherein said selective locking device (62) can be switched between a first condition, in which it keeps the second radial end (510a") of the first portion (510a) in abutment with the second radial end (510b") of the second portion (510b), and a second condition, in which it allows the second radial end (510a") of the first portion (510a) and the second radial end (510b") of the second portion (510b) to move away from each other.

5. Machine according to any one of the preceding claims, wherein said joints (530) are substantially U-shaped, and each end of said U-shape is coupled to a respective axial end of one of said tubular ducts (520).

6. Machine according to claim 5, wherein said joints (530) are positioned, in succession, on axially opposite sides of said annular wall (510).

7. Machine according to any one of the preceding claims, wherein said annular wall (510) is a cut-to-size extruded piece.

8. Machine according to any one of the preceding claims, wherein said tubular ducts (520) are made of copper.

9. Method for making a machine for producing liquid or semiliquid food products, said method comprising:
➢ providing a container (20) adapted to contain a liquid or semiliquid food product and/or a basic mixture and/or a semifinished product for producing said food product, said container (20) having a substantially vertical extension and a top opening (21);
➢ providing a tool (40) extending inside said container (20) to work said food product and/or said basic mixture and/or said semifinished product;
➢ coupling to said tool (40) an actuator (30) configured to move said tool (40) for the production of said food product;
➢ providing a thermal treatment system (50) comprising a thermal exchange structure (51);
➢ associating said thermal exchange structure (51) with said container (20),
wherein providing said thermal exchange structure (51) comprises:
- providing an annular wall (510); wherein said annular wall (510) comprises a first portion (510a) and a second portion (510b), each one of said first and second portions (510a, 510b) having a substantially C-shaped cross-section, wherein said mutually facing first portion (510a) and second portion (510b) define said annular wall (510) and have been obtained by cutting said annular wall (510) along a diametrical plane,
- making through holes (511) in said annular wall (510), said through holes (511) extending along said annular wall (510) in the axial direction;
- inserting substantially straight tubular ducts (520) into said through holes (511);
- jointing said tubular ducts (520) by means of joints (530), so as to form a path for a thermal fluid;
- removably coupling the first portion (510a) and the second portion (510b) of said annular wall (510) in such a way that said annular wall (510) can be moved between a closed condition, in which radial ends (510a', 510a") of the first portion (510a) adhere to respective radial ends (510b', 510b") of the second portion (510b), and an open condition, in which at least one of the radial ends (510a', 510a") of the first portion (510a) is spaced apart from the respective end (510b', 510b") of the second portion (510b);
- surrounding said container (20) with said annular wall (510).

10. Method according to claim 9, wherein providing said annular wall (510) comprises:
➢ extruding a continuous annular semifinished piece;
➢ cutting to size said continuous annular semifinished piece to obtain said annular wall (510).

11. Method according claim 9 or 10, wherein said tubular ducts (520) are inserted into said through holes (511) in such a way that two axial ends of each one of said tubular ducts (520) protrude from said annular wall (510).

12. Method according to any one of claims 9 to 11, comprising expanding said tubular ducts (520) after they have been inserted into the respective through holes (511).

## Patentansprüche

1. Maschine zur Produktion von flüssigen oder halbflüssigen Nahrungsmittelprodukten, umfassend:
➢ einen Behälter (20), der geeignet ist, ein flüssiges oder halbflüssiges Nahrungsmittelprodukt und/oder eine Grundmischung und/oder ein halbfertiges Produkt zur Produktion des Nahrungsmittelprodukts zu enthalten, wobei der Behälter (20) eine im Wesentlichen vertikale Ausdehnung und eine obere Öffnung (21) aufweist;
➢ mindestens ein Werkzeug (40), das sich in das Innere des Behälters (20) erstreckt, um das Nahrungsmittelprodukt und/oder die Grundmischung und/oder das halbfertige Produkt zu bearbeiten;
➢ ein Stellglied (30), das mit dem Werkzeug (40) gekoppelt ist, um das Werkzeug (40) für die Produktion des Nahrungsmittelprodukts zu bewegen;
➢ ein thermisches Behandlungssystem (50), umfassend eine Wärmetauschstruktur (51), die dem Behälter (20) zugeordnet ist und umfasst:
i. eine ringförmige Wand (510), die den Behälter (20) umgibt und Durchgangslöcher (511) aufweist, die sich in der axialen Richtung der ringförmigen Wand (510) erstrecken;
ii. im Wesentlichen gerade rohrförmige Kanäle (520), die in den Durchgangslöchern (511) untergebracht sind;
iii. Verbindungen (530) zum Verbinden der rohrförmigen Kanäle (520), um einen Pfad für ein thermisches Fluid zu bilden;
wobei die ringförmige Wand (510) einen ersten Abschnitt (510a) und einen zweiten Abschnitt (510b) umfasst, wobei jeder der ersten und zweiten Abschnitte (510a, 510b) einen im Wesentlichen C-förmigen Querschnitt aufweist, wobei der erste Abschnitt (510a) und der zweite Abschnitt (510b), die einander zugewandt sind, die ringförmige Wand (510) definieren;
wobei die Maschine ein Kupplungssystem (60) zum lösbaren Kuppeln des ersten Abschnitts (510a) und des zweiten Abschnitts (510b) der ringförmigen Wand (510) in einer solchen Weise umfasst, dass die ringförmige Wand (510) zwischen einem geschlossenen Zustand, in dem radiale Enden (510a', 510a") des ersten Abschnitts (510a) an entsprechenden radialen Enden (510b', 510b") des zweiten Abschnitts (510b) haften, und einem offenen Zustand, in dem mindestens eines der radialen Enden (510a', 510a") des ersten Abschnitts (510a) von dem jeweiligen Ende (510b', 510b") des zweiten Abschnitts (510b) beabstandet ist, bewegt werden kann.

2. Maschine nach Anspruch 1, wobei das thermische Behandlungssystem (50) ferner umfasst:
➢ einen Kompressor (54);
➢ einen Wärmetauscher (53);
➢ ein oder mehrere thermische Ausdehnungselemente (52);
wobei das thermische Fluid in dem thermischen Behandlungssystem (50) zirkuliert.

3. Maschine nach Anspruch 1 oder 2, wobei das Kupplungssystem (60) mindestens ein Gelenkelement (61) umfasst, das geeignet ist, ein erstes radiales Ende (510a') des ersten Abschnitts (510a) an einem entsprechenden ersten radialen Ende (510b') des zweiten Abschnitts (510b) beschränkt zu halten.

4. Maschine nach Anspruch 1 oder 2, wobei das Kupplungssystem (60) eine selektive Verriegelungsvorrichtung (62) umfasst, die auf das zweite radiale Ende (510a") des ersten Abschnitts (510a) und das zweite radiale Ende (510b") des zweiten Abschnitts (510b) wirkt, wobei die selektive Verriegelungsvorrichtung (62) zwischen einem ersten Zustand, in welchem sie das zweite radiale Ende (510a") des ersten Abschnitts (510a) in Anlage mit dem zweiten radialen Ende (510b") des zweiten Abschnitts (510b) hält, und einem zweiten Zustand umgeschaltet werden kann, in welchem sie dem zweiten radialen Ende (510a") des ersten Abschnitts (510a) und dem zweiten radialen Ende (510b") des zweiten Abschnitts (510b) erlaubt, sich voneinander zu entfernen.

5. Maschine nach einem der vorhergehenden Ansprüche, wobei die Verbindungen (530) im Wesentlichen U-förmig sind und jedes Ende der U-Form mit einem entsprechenden axialen Ende eines der rohrförmigen Kanäle (520) verbunden ist.

6. Maschine nach Anspruch 5, wobei die Verbindungen (530) der Reihe nach auf axial gegenüberliegenden Seiten der ringförmigen Wand (510) angeordnet sind.

7. Maschine nach einem der vorhergehenden Ansprüche, wobei die ringförmige Wand (510) ein zugeschnittenes, extrudiertes Stück ist.

8. Maschine nach einem der vorhergehenden Ansprüche, wobei die rohrförmigen Kanäle (520) aus Kupfer hergestellt sind.

9. Verfahren zur Herstellung einer Maschine zur Produktion von flüssigen oder halbflüssigen Nahrungsmittelprodukten, wobei das Verfahren umfasst:
➢ Bereitstellen eines Behälters (20), der geeignet ist, ein flüssiges oder halbflüssiges Nahrungsmittelprodukt und/oder eine Grundmischung und/oder ein halbfertiges Produkt zur Produktion des Nahrungsmittelprodukts zu enthalten, wobei der Behälter (20) eine im Wesentlichen vertikale Ausdehnung und eine obere Öffnung (21) aufweist;
➢ Bereitstellen eines Werkzeugs (40), das sich in das Innere des Behälters (20) erstreckt, um das Nahrungsmittelprodukt und/oder die Grundmischung und/oder das halbfertige Produkt zu bearbeiten;
➢ Koppeln des Werkzeugs (40) mit einem Stellglied (30), das dazu ausgestaltet ist, das Werkzeug (40) für die Produktion des Nahrungsmittelprodukts zu bewegen;
➢ Bereitstellen eines thermischen Behandlungssystems (50) umfassend eine Wärmetauschstruktur (51);
➢ Assoziieren der Wärmetauschstruktur (51) mit dem Behälter (20),
wobei das Bereitstellen der Wärmetauschstruktur (51) umfasst:
- Bereitstellen einer ringförmigen Wand (510); wobei die ringförmige Wand (510) einen ersten Abschnitt (510a) und einen zweiten Abschnitt (510b) umfasst, wobei jeder der ersten und zweiten Abschnitte (510a, 510b) einen im Wesentlichen C-förmigen Querschnitt aufweist, wobei der erste Abschnitt (510a) und der zweite Abschnitt (510b), die einander zugewandt sind, die ringförmige Wand (510) definieren und erhalten werden, indem die ringförmige Wand (510) entlang einer diametrischen Ebene geschnitten wird,
- Herstellen von Durchgangslöchern (511) in der ringförmigen Wand (510), wobei sich die Durchgangslöcher (511) entlang der ringförmigen Wand (510) in der axialen Richtung erstrecken;
- Einführen von im Wesentlichen geraden rohrförmigen Kanälen (520) in die Durchgangslöcher (511);
- Verbinden der rohrförmigen Kanäle (520) mit Hilfe von Verbindungen (530), um einen Pfad für ein thermisches Fluid zu bilden;
- lösbares Kuppeln des ersten Abschnitts (510a) und des zweiten Abschnitts (510b) der ringförmigen Wand (510) in einer solchen Weise, dass die ringförmige Wand (510) zwischen einem geschlossenen Zustand, in dem radiale Enden (510a', 510a") des ersten Abschnitts (510a) an entsprechenden radialen Enden (510b', 510b") des zweiten Abschnitts (510b) haften, und einem offenen Zustand, in dem mindestens eines der radialen Enden (510a', 510a") des ersten Abschnitts (510a) von dem jeweiligen Ende (510b', 510b") des zweiten Abschnitts (510b) beabstandet ist, bewegt werden kann;
- Umgeben des Behälters (20) mit der ringförmigen Wand (510) .

10. Verfahren nach Anspruch 9, wobei das Bereitstellen der ringförmigen Wand (510) umfasst:
➢ Extrudieren eines kontinuierlichen ringförmigen Halbzeugs;
➢ Zuschneiden des kontinuierlichen ringförmigen Halbzeugs auf Länge, um die ringförmige Wand (510) zu erhalten.

11. Verfahren nach Anspruch 9 oder 10, wobei die rohrförmigen Kanäle (520) so in die Durchgangslöcher (511) eingeführt werden, dass zwei axiale Enden eines jeden der rohrförmigen Kanäle (520) aus der ringförmigen Wand (510) herausragen.

12. Verfahren nach einem der Ansprüche 9 bis 11, umfassend das Aufweiten der rohrförmigen Kanäle (520), nachdem sie in die jeweiligen Durchgangslöcher (511) eingeführt wurden.

## Revendications

1. Machine pour produire de produits alimentaires liquides ou semi-liquides, comprenant :
- un récipient (20) adapté pour contenir un produit alimentaire liquide ou semi-liquide et/ou un mélange de base et/ou un produit semi-fini pour produire ledit produit alimentaire, ledit récipient (20) ayant une extension sensiblement verticale et une ouverture supérieure (21) ;
- au moins un outil (40) s'étendant à l'intérieur dudit récipient (20) pour travailler ledit produit alimentaire et/ou ledit mélange de base et/ou ledit produit semi-fini ;
- un actionneur (30) couplé audit outil (40) pour déplacer ledit outil (40) pour la production dudit produit alimentaire ;
- un système de traitement thermique (50) comprenant une structure d'échange thermique (51) associée audit récipient (20) et comprenant :
i. une paroi annulaire (510) entourant ledit récipient (20) et ayant des trous traversants (511) s'étendant dans la direction axiale de la paroi annulaire (510) ;
ii. des conduits tubulaires sensiblement droits (520) logés dans lesdits trous traversants (511) ;
iii. des raccords (530) pour raccorder lesdits conduits tubulaires (520) de manière à former un trajet pour un fluide thermique ;
dans laquelle ladite paroi annulaire (510) comprend une première partie (510a) et une seconde partie (510b), chacune desdites première et seconde parties (510a, 510b) ayant une coupe transversale sensiblement en forme de C, dans laquelle ladite première partie (510a) et ladite seconde partie (510b) se faisant face définissent une paroi annulaire (510) ;
dans laquelle ladite machine comprend un système de couplage (60) pour coupler de manière amovible la première partie (510a) et la seconde partie (510b) de ladite paroi annulaire (510) de telle manière que ladite paroi annulaire (510) puisse être déplacée entre un état fermé, dans lequel des extrémités radiales (510a', 510a") de la première partie (510a) adhèrent à des extrémités radiales respectives (510b', 510b") de la seconde partie (510b), et un état ouvert, dans lequel au moins l'une des extrémités radiales (510a', 510a") de la première partie (510a) est espacée de l'extrémité respective (510b', 510b") de la seconde partie (510b).

2. Machine selon la revendication 1, dans laquelle ledit système de traitement thermique (50) comprend en outre :
- un compresseur (54) ;
- un échangeur (53) ;
- un ou plusieurs éléments d'expansion thermique (52) ;
dans laquelle ledit fluide thermique circule dans ledit système de traitement thermique (50).

3. Machine selon la revendication 1 ou 2, dans laquelle ledit système de couplage (60) comprend au moins un élément d'articulation (61) adapté pour contraindre une première extrémité radiale (510a') de la première partie (510a) vers une première extrémité radiale respective (510b') de la seconde partie (510b).

4. Machine selon la revendication 1 ou 2, dans laquelle ledit système de couplage (60) comprend un dispositif de verrouillage sélectif (62) actif sur la seconde extrémité radiale (510a") de la première partie (510a) et la seconde extrémité radiale (510b") de la seconde partie (5 10b), dans laquelle ledit dispositif de verrouillage sélectif (62) peut être commuté entre un premier état, dans lequel il maintient la seconde extrémité radiale (510a") de la première partie (510a) en butée contre la seconde extrémité radiale (510b") de la seconde partie (5 10b), et un second état, dans lequel il permet à la seconde extrémité radiale (510a") de la première partie (510a) et à la seconde extrémité radiale (510b") de la seconde partie (510b) de s'éloigner l'une de l'autre.

5. Machine selon l'une quelconque des revendications précédentes, dans laquelle lesdits raccords (530) sont sensiblement en forme de U, et chaque extrémité de ladite forme de U est couplée à une extrémité axiale respective de l'un desdits conduits tubulaires (520).

6. Machine selon la revendication 5, dans laquelle lesdits raccords (530) sont positionnés, successivement, sur des côtés axialement opposés de ladite paroi annulaire (510).

7. Machine selon l'une quelconque des revendications précédentes, dans laquelle ladite paroi annulaire (510) est une pièce extrudée découpée sur mesure.

8. Machine selon l'une quelconque des revendications précédentes, dans laquelle lesdits conduits tubulaires (520) sont constitués de cuivre.

9. Procédé de fabrication d'une machine de production de produits alimentaires liquides ou semi-liquides, ledit procédé comprenant :
- la fourniture d'un récipient (20) adapté pour contenir un produit alimentaire liquide ou semi-liquide et/ou un mélange de base et/ou un produit semi-fini pour produire ledit produit alimentaire, ledit récipient (20) ayant une extension sensiblement verticale et une ouverture supérieure (21) ;
- la fourniture d'un outil (40) s'étendant à l'intérieur dudit récipient (20) pour travailler ledit produit alimentaire et/ou ledit mélange de base et/ou ledit produit semi-fini ;
- le couplage audit outil (40) d'un actionneur (30) configuré pour déplacer ledit outil (40) pour la production dudit produit alimentaire ;
- la fourniture d'un système de traitement thermique (50) comprenant une structure d'échange thermique (51) ;
- l'association de ladite structure d'échange thermique (51) audit récipient (20),
dans lequel la fourniture de ladite structure d'échange thermique (51) comprend :
- la fourniture d'une paroi annulaire (510) ; dans lequel ladite paroi annulaire (510) comprend une première partie (510a) et une seconde partie (510b), chacune desdites première et seconde parties (510a, 510b) ayant une coupe transversale sensiblement en forme de C, dans lequel ladite première partie (510a) et ladite seconde partie (510b) se faisant face définissent ladite paroi annulaire (510) et ont été obtenues par le découpage de ladite paroi annulaire (510) le long d'un plan diamétral,
- la réalisation de trous traversants (511) dans ladite paroi annulaire (510), lesdits trous traversants (511) s'étendant le long de ladite paroi annulaire (510) dans la direction axiale ;
- l'insertion de conduits tubulaires sensiblement droits (520) dans lesdits trous traversants (511) ;
- le raccordement desdits conduits tubulaires (520) à l'aide de raccords (530), de manière à former un trajet pour un fluide thermique ;
- le couplage amovible de la première partie (510a) et la seconde partie (510b) de ladite paroi annulaire (510) de telle manière que ladite paroi annulaire (510) puisse être déplacée entre un état fermé, dans lequel des extrémités radiales (510a', 510a") de la première partie (510a) adhèrent à des extrémités radiales (510b', 510b") respectives de la seconde partie (510b), et un état ouvert, dans lequel au moins l'une des extrémités radiales (510a', 510a") de la première partie (510a) est espacée de l'extrémité (510b', 510b") respective de la seconde partie (510b) ;
- l'enveloppement dudit récipient (20) avec ladite paroi annulaire (510).

10. Procédé selon la revendication 9, dans lequel la fourniture de ladite paroi annulaire (510) comprend :
- l'extrusion d'une pièce semi-finie annulaire continue ;
- le découpage sur mesure de ladite pièce semi-finie annulaire continue pour obtenir ladite paroi annulaire (510).

11. Procédé selon la revendication 9 ou 10, dans lequel lesdits conduits tubulaires (520) sont insérés dans lesdits trous traversants (511) de telle manière que deux extrémités axiales de chacun des conduits tubulaires (520) soient saillantes depuis ladite paroi annulaire (510).

12. Procédé selon l'une quelconque des revendications 9 à 11, comprenant l'expansion desdits conduits tubulaires (520) après leur insertion dans les trous traversants (511) respectifs.
